# EUROPÄISCHE PATENTSCHRIFT

(11) **EP 2 286 649 B1**
(45) Veröffentlichungstag und Bekanntmachung des Hinweises auf die Patenterteilung: **20.03.2019**
(21) Anmeldenummer: 10401087.1
(22) Anmeldetag: 23.06.2010
(51) Int. Cl.: A01B 63/10

(54) **Hydraulische Betätigungsvorrichtung**
Hydraulic operation device
Dispositif d'actionnement hydraulique

(30) Priorität: 30.06.2009 DE 102009026071
(43) Veröffentlichungstag der Anmeldung: 23.02.2011
(73) Patentinhaber: Amazonen-Werke H. Dreyer GmbH & Co. KG, 49205 Hasbergen (DE)
(72) Erfinder: Hoffmann, Karl-Peter, 27798 Hude (DE)

(56) Entgegenhaltungen:
- EP-A2- 1 616 471
- WO-A1-81/03409
- WO-A1-2005/115124
- DE-A1-102005 052 473

## Beschreibung

Die Erfindung betrifft eine landwirtschaftliche Bodenbearbeitungsmaschine gemäß des Oberbegriffes des Patentanspruches.

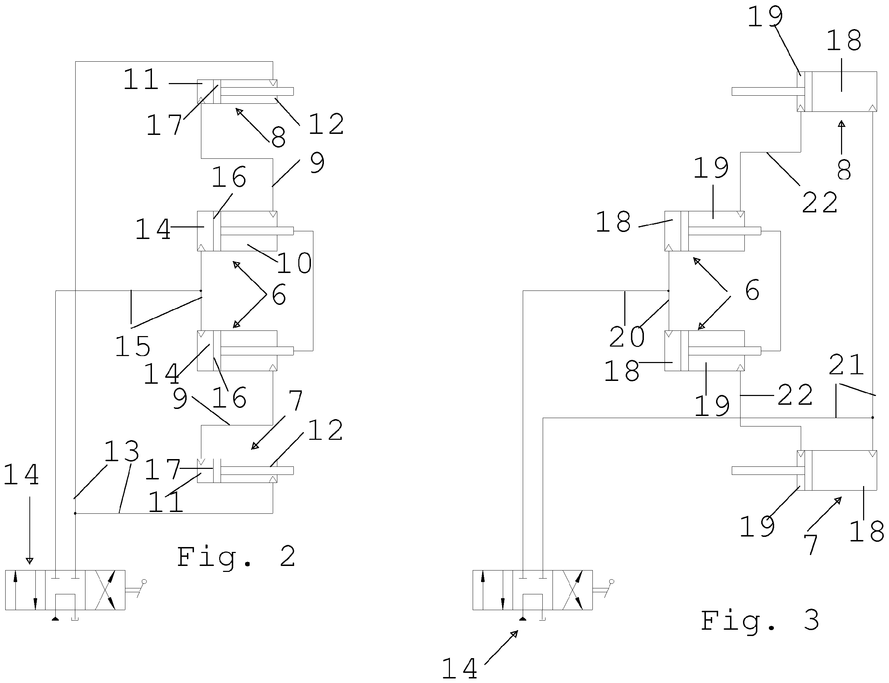

Derartige landwirtschaftliche Bodenbearbeitungsmaschinen sind bereits bekannt. Diese Betätigungsvorrichtungen werden vielfach für die Tiefeneinstellung der Bearbeitungswerkzeuge der Bodenbearbeitungsmaschinen verwendet, wobei den einzelnen Teilsektionen Tiefenführungselemente in Form von Bodenwalzen zugeordnet sind. Zwischen dem Rahmen der Bodenwalze und dem die Bearbeitungselemente tragenden Rahmen der Bearbeitungsmaschine sind doppeltwirkende Hydraulikzylinder in Form von Master- und Salvezylindern zugeordnet, so dass sämtliche Teilsektionen in gleicher Weise über eine Betätigungsvorrichtung in ihrer Bearbeitungstiefe einzustellen sind. Bei den bisher bekannten Betätigungsvorrichtungen werden unterschiedlich große Zylinder eingesetzt, um so einen Gleichlauf zwischen den einzelnen Zylindern über ein Master- und Salvesystem zu erreichen. Hierbei sind bei den bekannten Betätigungsvorrichtungen jeweils die kolbenstangenseitigen Zylinderräume der Masterzylinder mit den kolbenseitigen Zylinderräumen der Slavezylinder über Verbindungsleitungen miteinander verbunden. Die kolbenseitigen Zylinderräume der Masterzylinder und die kolbenstangenseitigen Zylinderräume der Slavezylinder sind über Leitungen mit einer Hydraulikanlage, so wie es im Stand der Technik gemäß Fig. 2 gezeigt ist, miteinander verbunden.

Somit müssen verschiedenartige Zylinder unterschiedlicher Baugrößen für das hydraulische Betätigungssystem nach dem Stand der Technik als Master- und Slavezylinder eingesetzt werden, wie dies in EP 1 616 471 A2, WO 81/03409 A1 oder WO 2005/115124 A1 gezeigt ist.

Der Erfindung liegt die Aufgabe zugrunde, die bekannte landwirtschaftliche Bodenbearbeitungsmaschine mit ihrer hydraulischen Betätigungseinrichtung in ihrem Aufbau hinsichtlich der Ausgestaltung der Hydraulikzylinder zu vereinfachen.

Diese Aufgabe wird erfindungsgemäß durch die kennzeichnenden Merkmale des Anspruches 1 gelöst. Infolge dieser Maßnahmen sind alle Zylinder einheitlich also eine Größe und Bauart ausgebildet. Hierdurch wird die Fertigung und Vorratshaltung der eingesetzten Zylinder vereinfacht, da nur noch eine einzige Sorte Hydraulikzylinder hier verwendet wird.

Um die Hydraulikzylinder des Master- und Slavesystems in einfacher Weise von einer Hydraulikanlage über Hydraulikleitungen ansteuern zu können, ist vorgesehen, dass entweder die kolbenbodenseitigen Zylinderräume über Hydraulikleitungen mit der Hydraulikanlage und die kolbenstangenseitigen Zylinderräume miteinander verbunden sind, oder dass die kolbenstangenseitigen Zylinderräume über Hydraulikleitungen mit der Hydraulikanlage und die kolbenbodenseitigen Zylinderräume miteinander verbunden sind.

Weitere Einzelheiten sind der Beispielsbeschreibung und den Zeichnungen zu entnehmen. Hierbei zeigen
- Fig. 1: das mit einer hydraulischen Betätigungseinrichtung versehene Bodenbearbeitungsgerät in perspektivischer und prinzipieller Darstellung,
- Fig. 2: den Hydraulikschaltplan der hydraulischen Betätigungseinrichtung nach dem Stand der Technik für das Bodenbearbeitungsgerät und
- Fig. 3: den Hydraulikschaltplan der hydraulischen Betätigungseinrichtung nach der Erfindung für das Bodenbearbeitungsgerät.

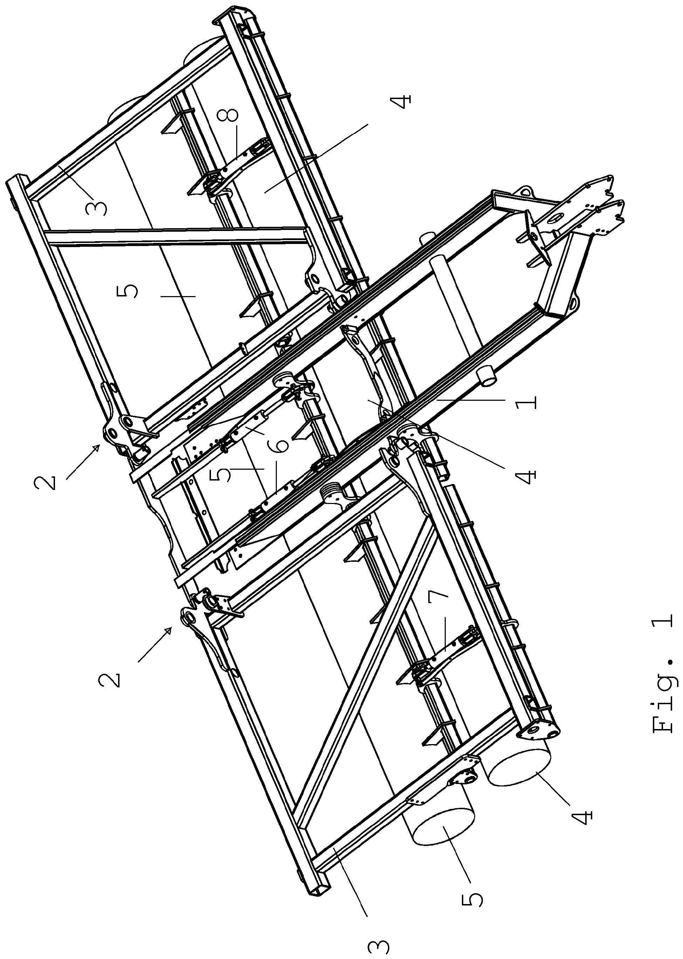

Das Bodenbearbeitungsgerät gemäß Fig. 1 weist einen mittleren Tragrahmen 1 auf. An dem mittleren Tragrahmen ausgebildeten Mittelrahmen 1 sind über eine Gelenkanordnung 2 beidseitig jeweils ein Seitenrahmen 3 angeordnet. An dem Mittelrahmen 1 und den Seitenrahmen 3 sind Bodenbearbeitungswerkzeuge 4 mit zugeordneten Tiefenführungselementen 5 angeordnet. Über die Tiefenführungselemente 5, die beispielsweise als Bodenwalzen ausgebildet sind, lässt sich die Bearbeitungstiefe der Bodenbearbeitungswerkzeuge 4, die beispielsweise als Scheiben, Zinken etc. ausgebildet sein können, durch die Verstellung zueinander einstellen.

Der Mittelrahmen 1 und die Seitenrahmen 3 bilden jeweils einzelne Teilsektionen der Maschine. Zwischen dem von dem Mittelrahmen 1 und dem Seitenrahmen 3 gebildeten Geräterahmen und den als Bodenwalzen ausgebildete Tiefenführungselementen 5ist jeder Teilsektion eine Tiefeneinstellungseinrichtung 6, 7, 8, die als doppeltwirkende Hydraulikzylinder ausgebildet sind, angeordnet. Hierbei sind die den einzelnen Teilsektionen zugeordneten Hydraulikzylinder entweder als Masterzylinder 6 oder als Slavezylinder 7, 8 eines Master- und Slavehydrauliksystems ausgestaltet. Aus diesem Grunde sind dem Mittelrahmen 1 zwei Masterzylinder 6, die jeweils mit einem Slavezylinder 7 oder 8 verbunden sind, zugeordnet, welches anhand der Fig. 2 für den Stand der Technik und anhand der Fig. 3 nach der Erfindung noch näher erläutert wird. Die Tiefenstellungseinrichtung zusammen mit den Hydraulikzylindern 6, 7, 8 bilden die hydraulische Betätigungsvorrichtung zur Bearbeitungstiefeneinstellung der Bodenbearbeitungswerkzeuge 4 über die nachgeordneten Tiefenführungselemente 5, hier den Bodenwalzen. Wie bereits vor erwähnt, ist jeder Teilsektion 1, 3, die von dem Mittelrahmen 1 bzw. den beiden Seitenrahmen 3 gebildet wird ein Teilabschnitt der Bodenwalze 5 und Bearbeitungselementen 4 zugeordnet. Über die Gelenke 2, mit denen die Seitenrahmen 3 an dem Mittelrahmen 1 angeordnet sind, können die äußeren Teilsektionen aus der in Fig. 1 dargestellten Arbeitsposition in eine Transportstellung zusammengeklappt werden.

Die Fig. 2 zeigt den Hydraulikschaltplan des Master- und Slavesystem nach dem Stand der Technik für die Bodenbearbeitungsmaschine gemäß Fig. 1. Der mittleren Teilsektion 1 sind die beiden als Masterzylinder ausgebildeten Hydraulikzylinder 6 zugeordnet. Jeder dieser beiden Masterzylinder 6 ist jeweils mit dem einer Teilsektion 3 zugeordneten Hydraulikzylinder 7, 8über die Hydraulikleitungen 9 verbunden. Der jeweilige kolbenstangenseitige Zylinderraum 10 des jeweiligen Masterzylinders 6 ist über eine Hydraulikleitung 9 mit dem jeweiligen kolbenseitigen Zylinderraum 11 des jeweiligen Slavezylinders 7 verbunden. Weiterhin ist der jeweilige kolbenstangenseitige Zylinderraum 12 über die Leitungen 13 mit der Hydraulikanlage 14 des die Bodenbearbeitungsmaschine ziehenden Ackerschleppers verbunden. Die jeweiligen kolbenseitigen Zylinder 14 des jew3eiligen Masterzylinders 6 ist über Hydraulikleitungen 15 an den anderen Hydraulikanschluss der Hydraulikanlage 14 des Ackerschleppers angeschlossen. Die kolbenstangenseitige Ringfläche 16 des jeweiligen Masterzylinders 6 weist die gleiche Größe wie die Kolbenfläche 17 des jeweiligen Slavezylinders 7, 8auf. Hierdurch wird ein Gleichlauf der Master- 6 und Slavezylinder 7, 8 bei Beaufschlagung der kolbenseitigen Zylinderräume 14 der Masterzylinder 6 oder bei Beaufschlagung der kolbenstangenseitigen Zylinderräume 12 der Slavezylinder 7, 8 mit Öldruck durch die Hydraulikanlage gewährleistet. Diese Art der Auslegung der Master- 6 und Slavezylinder 7, 8 für das Master- 6 und Slavesystem 7, 8 nach dem Stand der Technik bedeutet jedoch, dass die Masterzylinder größer als die Slavezylinder ausgeführt sein müssen, um die vorbeschriebene Bedingung von gleich großen wirksamen Zylinderräumen 10 und 11, nämlich die wirksame kolbenstangenseitige Zylinderfläche 16 des Masterzylinders 6 muss gleich groß sein wie die wirksame kolbenseitige Fläche 17 des jeweiligen Slavezylinders 7, 8, um den gewünschten Gleichlauf von Master- 6 und Slavezylinder 7 zu erhalten. Nur hierdurch ist über eine einzige hydraulische Zuleitung 9 eine gleich tiefe Bodenbearbeitungstiefe für die Bodenbearbeitungswerkzeuge 4 und eine gleiche Verstellung der Tiefenführungselemente 5 gewährleistet.

Nach der erfindungsgemäß Ausgestaltung des Master- 6 und Slavesystems gemäß Fig. 3 werden sowohl für die Master wie auch für die Salvezylinder 7, 8 des Master- und Slavesystems Zylinder gleicher Bauart und gleicher Größe verwendet. Dies bedeutet, dass alle kolbenseitigen 18 und kolbenstangenseitigen 19 Zylinderräume aller Hydraulikzylinder 6, 7, 8 jeweils gleich große wirksame Kolbenflächen aufweisen, wie durch die Darstellung in Fig. 3 im Vergleich zu der Darstellung in Fig. 2 auch bildhaft dargestellt ist. Hierbei sind nach dem in Fig. 3 vorgesehenen Schaltungsprinzip die kolbenbodenseitigen Zylinderräume 18 von Master- 6 und Slavezylinder 7, 8 über Hydraulikleitungen 20 und 21 mit der Hydraulikanlage 14 des Schleppers und die kolbenstangenseitigen Zylinderräume 19 von Master- 6 und Slavezylinder 7, 8 über die Hydraulikleitungen 22 entsprechend miteinander verbunden. Somit ist also die eine Sorte der Zylinderräume über Hydraulikleitungen 20, 21 an die Hydraulikanlage 14 angeschlossen und die andere Sorte der Zylinderräume von Master- 6 und Salvezylinder 7, 8 jeweils über Hydraulikleitungen 22 jeweils miteinander verbunden, wie Fig. 3 zeigt.

Es wäre auch denkbar, dass die kolbenstangenseitigen Zylinderräume über Hydraulikleitungen der Hydraulikanlage die kolbenbodenseitigen Zylinderräume miteinander verbunden sind.

## Patentansprüche

1. Landwirtschaftliche Bodenbearbeitungsmaschine mit zumindest zwei Teilsektionen, wobei jeder Teilsektion zumindest ein über zumindest eine hydraulische Betätigungsvorrichtung aufweisende Tiefeneinstellungsvorrichtung verstellbares Bodenbearbeitungselement zugeordnet ist, wobei jede Tiefeneinstellungsvorrichtung zumindest einen doppeltwirkenden Hydraulikzylinder (6, 7, 8) aufweist, wobei die der einen Teilsektion zugeordneten Hydraulikzylinder als Masterzylinder und die den anderen Teilsektionen zugeordneten Hydraulikzylinder als Slavezylinder ausgebildet sind, wobei einige der Zylinderräume der Master- und Slavezylinder über Hydraulikleitungen miteinander und einige der Zylinderräume der Master- und Slavezylinder über Hydraulikleitungen mit einer Hydraulikanlage verbunden sind, **dadurch gekennzeichnet, dass** alle kolbenbodenseitigen Zylinderräume (18) alle Hydraulikzylinder (6, 7, 8) jeweils gleich große wirksame Kolbenflächen und alle kolbenstangenseitigen Zylinderräume (19) aller Hydraulikzylinder (6,7,8) jeweils gleich große wirksame Kolbenflächen aufweisen, Wobei die Zylinderräume der Hydraulikzylinder nach einem der beiden folgenden Systeme miteinander über Hydraulikleitungen verbunden sind: dass die kolbenbodenseitigen Zylinderräume (18) über Hydraulikleitungen (21) mit der Hydraulikanlage (14) und die kolbenstangenseitigen Zylinderräume (19) über Hydraulikleitungen (22) miteinander verbunden sind, oder die kolbenstangenseitigen Zylinderräume über Hydraulikleitungen mit der Hydraulikanlage und die kolbenbodenseitigen Zylinderräume miteinander verbunden sind.

## Claims

1. Agricultural soil cultivation machine having at least two part sections, each part section being assigned at least one soil cultivation element which can be adjusted via a depth setting apparatus which has at least one hydraulic actuating apparatus, each depth setting apparatus having at least one double-acting hydraulic cylinder (6, 7, 8), the hydraulic cylinders which are assigned to the one part section being configured as master cylinders, and the hydraulic cylinders which are assigned to the other part sections being configured as slave cylinders, some of the cylinder chambers of the master and slave cylinders being connected to one another via hydraulic lines, and some of the cylinder chambers of the master and slave cylinders being connected to a hydraulic system via hydraulic lines, **characterized in that** all piston crown-side cylinder chambers (18) of all hydraulic cylinders (6, 7, 8) have in each case active piston faces of identical size, and all piston rod-side cylinder chambers (19) of all hydraulic cylinders (6, 7, 8) have in each case active piston faces of identical size, the cylinder chambers of the hydraulic cylinders being connected to one another via hydraulic lines in accordance with one of the two following systems: **in that** the piston crown-side cylinder chambers (18) are connected to the hydraulic system (14) via hydraulic lines (21) and the piston rod-side cylinder chambers (19) are connected to one another via hydraulic lines (22), or the piston rod-side cylinder chambers are connected to the hydraulic system via hydraulic lines and the piston crown-side cylinder chambers are connected to one another.

## Revendications

1. Engin agricole de travail du sol, comprenant au moins deux sections partielles, au moins un élément de travail du sol déplaçable par le biais d'un dispositif d'ajustement de profondeur présentant au moins un dispositif d'actionnement hydraulique étant associé à chaque section partielle, chaque dispositif d'ajustement de profondeur présentant au moins un cylindre hydraulique à double action (6, 7, 8), les cylindres hydrauliques associés à l'une des sections partielles étant réalisés sous forme de maîtres-cylindres et les cylindres hydrauliques associés aux autres sections partielles étant réalisés sous forme de cylindres esclaves, certains des espaces de cylindres des maîtres-cylindres et des cylindres esclaves étant connectés les uns aux autres par le biais de conduites hydrauliques et certains des espaces de cylindres des maîtres-cylindres et des cylindres esclaves étant connectés à une installation hydraulique par le biais de conduites hydrauliques, **caractérisé en ce que** tous les espaces de cylindres (18) du côté du fond de piston de tous les cylindres hydrauliques (6, 7, 8) présentent à chaque fois des surfaces de piston actives de même dimension et tous les espaces de cylindres (19) du côté de la tige de piston de tous les cylindres hydrauliques (6, 7, 8) présentent à chaque fois des surfaces de piston actives de même dimension, les espaces de cylindre des cylindres hydrauliques étant connectés les uns aux autres par le biais de conduites hydrauliques selon l'un des deux systèmes suivants : par le fait que les espaces de cylindre (18) du côté du fond de piston sont connectés les uns aux autres par le biais de conduites hydrauliques (21) à l'installation hydraulique (14) et les espaces de cylindres (19) du côté de la tige de piston sont connectés les uns aux autres par le biais de conduites hydrauliques (22), ou par le fait que les espaces de cylindres du côté de la tige de piston sont connectés par le biais de conduites hydrauliques à l'installation hydraulique et les espaces de cylindres du côté du fond de piston sont connectés les uns aux autres.
